# EUROPÄISCHE PATENTSCHRIFT

(11) **EP 2 633 573 B1**
(45) Veröffentlichungstag und Bekanntmachung des Hinweises auf die Patenterteilung: **06.08.2014**
(21) Anmeldenummer: 11773837.7
(22) Anmeldetag: 13.09.2011
(51) Int. Cl.: H01M 2/10, H01M 10/60

(54) **TEMPERATURGESTEUERTE BATTERIE**
TEMPERATURE REGULATED BATTERY
BATTERIE AVEC PILOTAGE DE TEMPÉRATURE

(30) Priorität: 29.10.2010 CH 18142010
(43) Veröffentlichungstag der Anmeldung: 04.09.2013
(73) Patentinhaber: Obrist Powertrain GmbH, 6890 Lustenau (AT)
(72) Erfinder: OBRIST, Frank, A-6923 Lauterach (AT); BUSCH, Christian, A-6800 Feldkirch (AT); OBRIST, Oliver, A-6850 Dornbirn (AT)
(74) Vertreter: Kilchert, Jochen
(86) Internationale Anmeldenummer: PCT/IB2011/002149
(87) Internationale Veröffentlichungsnummer: WO 2012/056276

(56) Entgegenhaltungen:
- DE-A1-102008 057 305
- DE-A1-102009 008 222

## Beschreibung

Die Erfindung betrifft eine temperaturgesteuerte Batterie, insbesondere als Energiequelle eines Fahrzeugantriebes, mit zahlreichen flachen, elektrisch miteinander verbundenen Batteriezellen, die parallel zueinander und mit zwischen ihnen angeordneten Abstandshaltern, in mehrere Batteriekammern verteilt, in einem thermisch isolierten Batteriegehäuses zu Zellenpaketen vereinigt sind, wobei im Batteriegehäuse ein mit den Batteriezellen in Kontakt stehender, fliessfähiger erster Wärmeträger eingeschlossen ist, der über im Batteriegehäuse eingeschlossene Wärmeübertragungsflächen in Wärmeaustausch mit mindestens einem in einem Kanalsystem eingeschlossenen zweiten Wärmeträger steht, das mindestens eine aus der Batterie herausführende Zu- und Ableitung für einen temperaturgesteuerten Wärmeaustausch ausserhalb der Batterie aufweist und für eine erzwungene Konvektion an den Batteriezellen innerhalb des Batteriegehäuses mindestens eine Pumpe eingeschlossen ist, die zu- und abströmseitig in Strömungsverbindung mit dem ersten Wärmeträger steht

Eine von einem gasförmigen Kühlmedium durchströmte Batterie dieser Art ist durch die DE 10 2009 008 222 bekannt. Durch die WO 2010053689 ist es weiterhin bekannt, zur Bildung von Kühlflüssigkeit aufnehmenden Räumen zwischen ihren Batteriezellen als Distanzhalter jeweils ein gewelltes Profil aufweisende Plattenkörper vorzusehen. Durch die DE 102008061755 oder die DE102008027293 wird für die Fixierung von Batteriezellen vorgeschlagen, jeweils zwischen zwei in einer Batteriekammer eingesetzten Batteriezellen eine elastisch komprimierbare Zwischenschicht anzuordnen, die aus einem Vlies, einem Kunststoffschaummaterial oder einem gewellten Federblech besteht, so dass nach Einpressen der Batteriezellen zusammen mit der komprimierbaren Zwischenschicht, zwischen die Batteriekammer begrenzenden, metallischen Haltewänden, ein Anpressdruck entsteht, der zu diesen den wärmeleitenden Kontakt aufrecht erhält und der eine laterale Ausdehnung der Speicherzellen beim Laden und Entladen kompensiert. Die Ableitung von Wärme aus den Speicherzellen ist folglich nur durch Wärmeleitung entlang der metallischen Wände der Batteriekammer zu einer gekühlten Grundplatte der Batterie hin möglich. Zur Verbesserung der Wärmeübertragung von Batteriezellen zu einem strömungsfähigen Wärmeträger ist es durch die DE 44 19 281 und EP 1 271 084 auch bekannt, in der Batterie mehrere parallel zueinander verlaufende, von einem Kühlmittel durchströmte Plattenkörper vorzusehen.

Der Erfindung liegt die Aufgabe zugrunde, eine Batterie der eingangs genannten Art zu finden, die eine wesentlich verbesserte Wärmezu- oder Abfuhr von den Batteriezellen gewährleistet, so dass die Batterie mit verbesserter und gleichmässigerer Temperaturverteilung bei optimaler Betriebstemperatur gehalten wird, folglich höher belastbar ist und eine höhere Lebensdauer aufweist. Die Lösung der genannten Aufgabe erfolgt erfindunggemäss aufgrund der kennzeichnenden Merkmale des Patentanspruchs 1. Vorteilhafte Ausführungsformen der Erfindung sind Gegenstand der abhängigen Patentansprüche und der folgenden Beschreibung anhand der Zeichnungen zu entnehmen. Es zeigt:

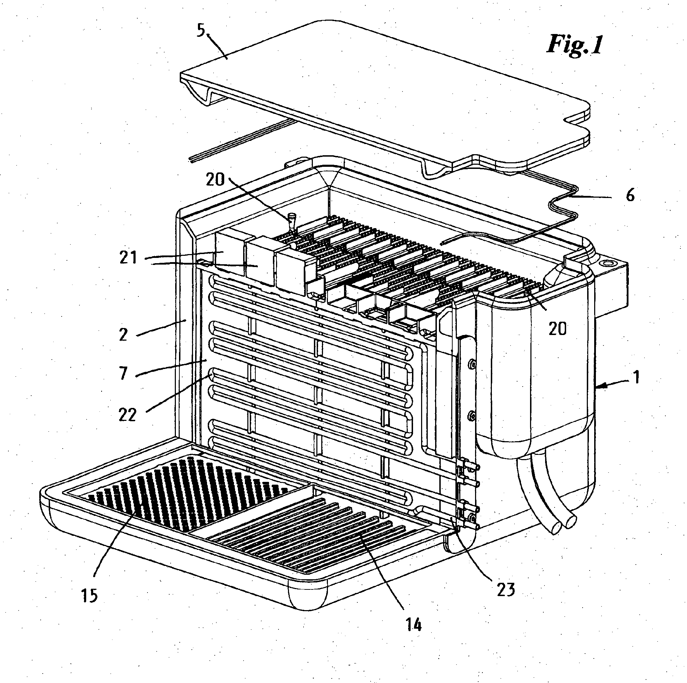

Fig. 1 den perspektivisch dargestellten inneren Aufbau einer erfindungsgemässen Batterie mit einem parallel zu ihrem Boden und einer senkrechten, mittleren Ebene geführten Ausschnitt, bei abgehobenem Batteriedeckel,

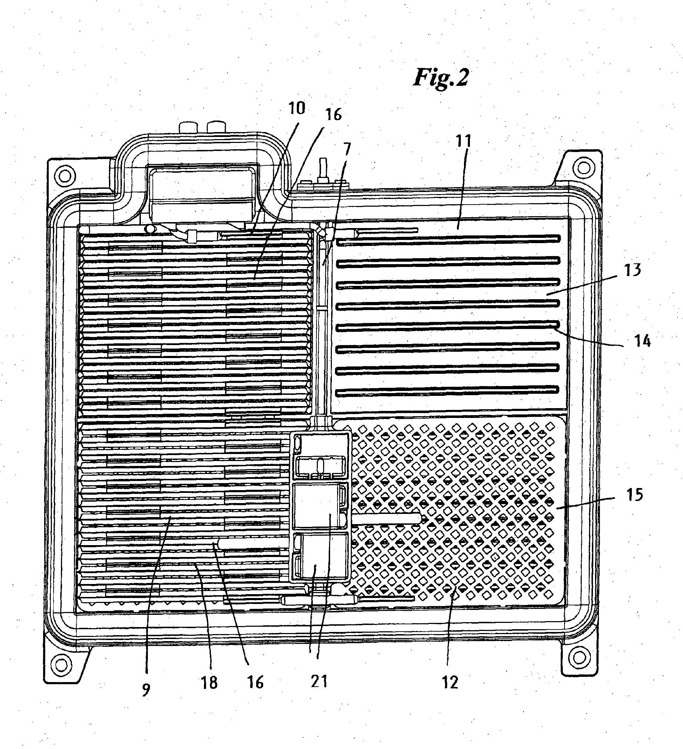

Fig.2 eine Aufsicht auf die geöffnete Batterie, mit nur halbseitig eingesetzten Zellenpaketen und einer teilweise noch fehlenden Bodenplatte,

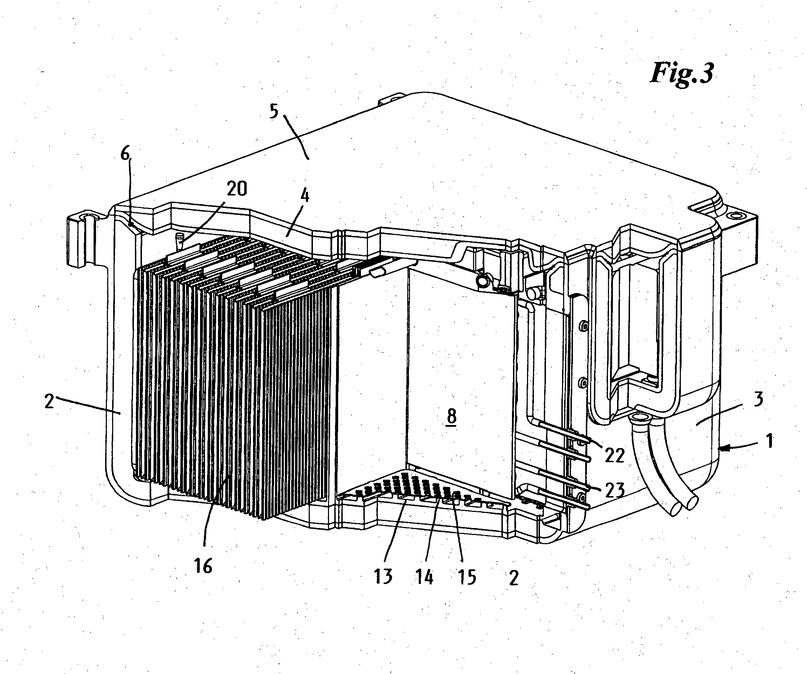

Fig.3 eine perspektivische Innenansicht der Batterie nach Fig.1 aufgrund einer teilweise weggebrochenen Darstellung,

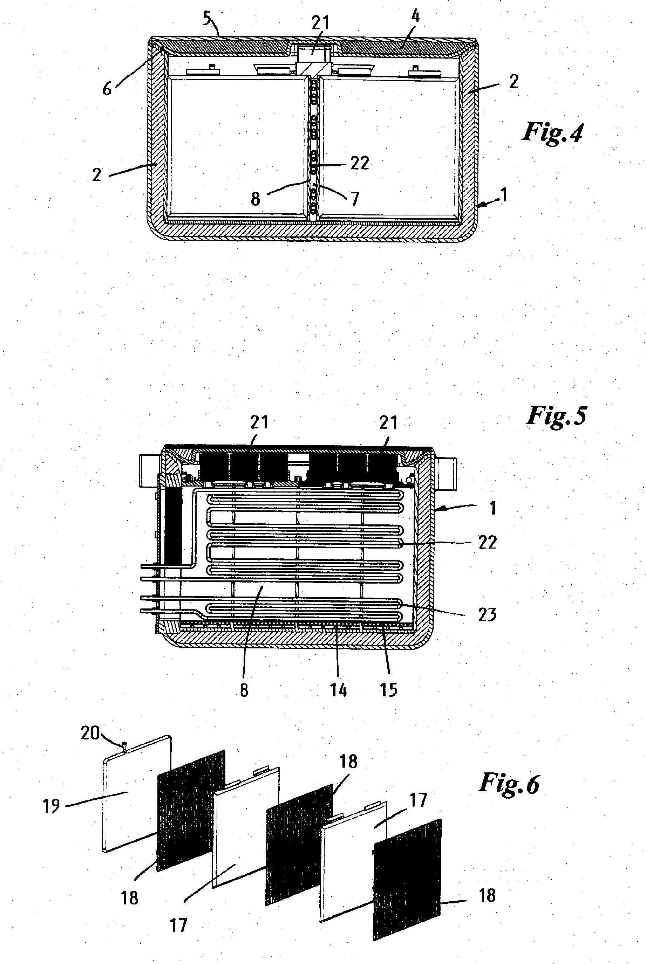

Fig.4 einen Vertikalschnitt durch die Batterie nach Fig.1 quer zu inneren Wärmeaustauschrohren,
Fig.5 einen Vertikalschnitt durch die Batterie nach Fig.1 parallel zu Wärmeaustauschrohren und
Fig. 6 in perspektivischer Darstellung einige plattenförmige Elemente der Batterie vor ihrer Vereinigung zu einem Batteriepaket.

Die Batterie 1 hat ein wannenförmiges, eine innere Isolierschicht 2 aufweisendes Gehäuse 3, das durch einen aufgesetzten, ebenfalls eine Isolierschicht 4 aufweisenden Deckel 5 mit Hilfe eines eingelegten Dichtbandes 6 dicht verschlossen ist. Dabei kann ein unter dem Deckel 5 verbleibender Freiraum zur Anordnung eines Batteriemanagementsystems verwendet werden.

Der Innenraum des Batteriegehäuses 3 ist beim dargestellten Ausführungsbeispiel durch eine zentrale, einen Wärmetauscherraum 7 bildende Doppelwand 8 und zwei seitlich von ihr abzweigende Querwände in vier Batteriekammern 9 bis 12 unterteilt. Eine andere Aufteilung mit z.B. nur einer oder zwei Batteriekammer und seitlich angeordneter Doppelwand ist jedoch im Rahmen der Erfindung ebenfalls möglich.

Der Gehäuseboden 13 ist durch parallel zueinander und senkrecht zur Doppelwand 8 verlaufende Bodenrippen 14 profiliert und trägt eine auf diese aufgelegte Lochplatte 15, so dass die beispielsweise vier Batteriekammern 9 bis 12 entlang des profilierten Gehäusebodens 13 miteinander und mit dem durch die Doppelwand 8 gebildeten Wärmetauscherraum 7 kommunizieren.

In die Batteriekammern 9 bis 12 sind Zellenpakete 16 eingesetzt, die aus einer Schichtung von taschenförmigen, flachen Batteriezellen 17 mit zwischen ihnen angeordneten, ein gewelltes Rippenprofil aufweisenden Blechen 18 bestehen. Ausserdem ist in jedem Zellenpaket 16 eine durch ein komprimiertes Gas gefüllte, flache, der Grösse der Batteriezellen angepasste Drucktasche 19 angeordnet ist, so dass die in der betreffenden Batteriekammer 9 bis 12 angeordneten Batteriezellen 17 in dieser gleichmässig, unter dem Druck des Gases, klemmend gehalten sind. Da das Füllen der Drucktaschen 19 erst nach dem Einsetzen eines solchen Zellenpaketes 16 in eine Batteriekammer 9 bis 12 erfolgt, lassen sich die Zellenpakete 16 auf besonders einfache Weise montieren. Hierzu hat jede Drucktasche 19 einen nach oben frei abstehenden, dicht verschliessbaren Füllnippel 20.

Das gewellte Blech 18 besteht vorzugsweise relativ dünnwandig aus einer Aluminiumlegierung, so dass sich es sich unter dem Druck der Drucktasche 19 verformt und mit seinen Profilrippen, für eine gute Wärmeleitung, eng an die Batteriezellen anschmiegt.

Die Profilrippen der zwischen den Batteriezellen 17 angeordneten Bleche 18 verlaufen in vertikaler Richtung und bilden somit in Kontakt mit den angrenzenden Batteriezellen zwischen diesen eine entsprechende Anzahl von vertikalen Kanälen, die an den profilierten Gehäuseboden 13 angrenzen. Folglich haben diese entlang der Batteriezellen 17 verlaufenden Kanäle über den Gehäuseboden 13 eine Strömungsverbindung mit dem durch die zentrale Doppelwand gebildeten Wärmetauscherraum 7.

Um aufgrund dieser Strömungsverbindung einen besonders wirksamen Wärmeaustausch zwischen der Oberfläche der Batteriezellen 17 und der zwischen ihnen und dem profilierten Blech eingeschlossenen Flüssigkeit zu erreichen, sind oberhalb des Wärmetauscherraumes 7 mehrere Miniaturpumpen 21 in Reihe nebeneinander angeordnet, durch die ein z.B. durch Transformatorenöl bestehender flüssiger Wärmeträger aus dem Wärmetauscherraum 7 in Richtung der aufsteigenden Wärme nach oben gesaugt wird, so dass er über den profilierten Gehäuseboden 13 und folglich vom unteren Bereich der Batteriezellen 17 angesaugt wird. Dabei gelangt der nach oben strömende Wärmeträger in Wärmeaustausch mit im Wärmetauscherraum 7 angeordneten Kühlschlangen 22, die mit einem ausserhalb der Batterie vorgesehenen Wärmetauscher verbundenen sind. Dabei können entsprechend dem dargestellten Ausführungsbeispiel im Wärmetauscherraum 7 Kühlschlangen 22, 23 von zwei voneinander unabhängigen, mit verschiedenen Wärmeträgern betriebene Systeme vorgesehen sein, von denen eines z.B. von Kühlwasser und ein anderes vom Kältemittel einer Klimaanlage durchströmt wird. Dabei kann z.B. ein Kühlsystem dazu dienen, eine Überhitzung der Batteriezellen beim Aufladen der Batterie zu verhindern, so dass beide Systeme erst bei Nutzung der Batterie zum Einsatz kommen.

## Patentansprüche

1. Temperaturgesteuerte Batterie, insbesondere als Energiequelle eines Fahrzeugantriebes, mit zahlreichen flachen, elektrisch miteinander verbundenen Batteriezellen (17), die parallel zueinander und mit zwischen ihnen angeordneten Abstandshaltern (18), in mehrere Batteriekammern (9-12) verteilt, in einem thermisch isolierten Batteriegehäuse (3) zu Zellenpaketen (16) vereinigt sind, wobei im Batteriegehäuse (3) ein mit den Batteriezellen (17) in Kontakt stehender, fliessfähiger erster Wärmeträger eingeschlossen ist, der über im Batteriegehäuse (3) eingeschlossene Wärmeübertragungsflächen (22,23) in Wärmeaustausch mit mindestens einem in einem Kanalsystem eingeschlossenen zweiten Wärmeträger steht, das mindestens eine aus der Batterie herausführende Zu- und Ableitung für einen temperaturgesteuerten Wärmeaustausch ausserhalb der Batterie aufweist und für eine erzwungene Konvektion an den Batteriezellen (17) innerhalb des Batteriegehäuses mindestens eine Pumpe (21) eingeschlossen ist, die zu- und abströmseitig in Strömungsverbindung mit dem ersten Wärmeträger steht,
**dadurch gekennzeichnet, dass**
das eine Zu- und Ableitung für einen temperaturgesteuerten Wärmeaustausch ausserhalb der Batterie aufweisende Kanalsystem sich durch einen zwischen Zellenpaketen (16) vorgesehenen, vertikal ausgerichteten, mit dem ersten Wärmeträger gefüllten Wärmetauscherraum (7) erstreckt, der über bodenseitige Hohlräume mit zwischen den Batteriezellen vorgesehenen Räumen der Zellenpakete (16) kommuniziert, wobei für eine erzwungene Konvektion in dem Wärmetauscherraum (7) und folglich zwischen den Batteriezellen (17) im oberen Bereich des Wärmetauscherraums (7) mehrere Miniaturpumpen (21) angeordnet sind, wobei in jedem Paket (16) von Batteriezellen (17) eine durch ein komprimiertes Gas gefüllte Drucktasche (19) angeordnet ist, so dass die in der betreffenden Batteriekammer (9-12) angeordneten Batteriezellen (17) in dieser unter dem Druck des Gases klemmend gehalten sind, und wobei die Zwischenkammern zwischen den Batteriezellen (17) durch mit diesen in wärmeleitendem Kontakt stehende, metallische Abstandshalter (18) gebildet sind, die aus einem vertikal verlaufende Profilrippen aufweisenden Blech (18) bestehen, so dass sich die Profilrippen in wärmeleitendem Kontakt mit der Oberfläche angrenzender Batteriezellen (17) befinden.

2. Batterie nach Anspruch 1,
**dadurch gekennzeichnet, dass**
die Batterie einen abgedichtet aufsetzbaren Deckel (5) aufweist und die Drucktaschen (19) einen dicht verschliessbaren Füllanschluss (20) aufweisen, so dass die Drucktaschen (19) nach klemmfreiem Einsetzen der Batteriezellen in eine Batteriekammer (9-12) unter klemmenden Druck setzbar sind.

## Claims

1. Temperature-controlled battery, especially as a power source for a vehicle drive, having a large number of planar battery cells (17) electrically connected one to another, which, in parallel to one another, with spacers (18) arranged between them, and distributed in a plurality of battery chambers (9 - 12), are combined in a thermally insulated battery housing (3) to form cell units (16), wherein there is contained in the battery housing (3) a flowable first heat transfer medium in contact with the battery cells (17) which is, by way of heat transfer surfaces (22, 23) contained in the battery housing (3), in heat exchange with at least one second heat transfer medium contained in a duct system which has at least one inlet and outlet leading out from the battery for temperature-controlled heat exchange outside the battery, and wherein for forced convection at the battery cells (17) there is contained within the battery housing at least one pump (21) which is in flow communication in the upstream and downstream direction with the first heat exchanger,
**characterised in that**
the duct system which has an inlet and outlet for temperature-controlled heat exchange outside the battery extends through a vertically oriented heat-exchange space (7) which is provided between cell units (16) and is filled with the first heat transfer medium and which is in communication, by way of bottom hollow spaces, with spaces of the cell units (16), which latter spaces are provided between the battery cells, wherein for forced convection in the heat exchange space (7) and consequently between the battery cells (17) there are arranged in the upper region of the heat-exchange space (7) a plurality of miniature pumps (21), wherein in each unit (16) of battery cells (17) there is arranged a pressure pocket (19) filled with a compresed gas, so that the battery cells (17) arranged in the battery chamber (9 - 12) in question are held clamped in the latter by the pressure of the gas, and wherein the intermediate chambers between the battery cells (17) are formed by metal spacers (18) which are in heat-conducting contact with the cells and which consist of a plate (18) having vertically extending profiled ribs so that the profiled ribs are in heat-conducting contact with the surface of adjacent battery cells (17).

2. Battery according to claim 1,
**characterised in that**
the battery has a lid (5) mountable in sealed manner, and the pressure pockets (19) have a tightly closable filling connection (20), so that, after insertion of the battery cells into a battery chamber (9 - 12) without being clamped, the pressure pockets (19) can be set under clamping pressure.

## Revendications

1. Batterie à température régulée, destinée en particulier à servir de source d'énergie pour un système d'entraînement de véhicule, comprenant plusieurs éléments de batterie (17) plats reliés les uns aux autres électriquement, lesquels sont parallèles les uns aux autres et sont réunis à l'aide d'écarteurs (18), lesquels sont disposés entre lesdits éléments et les éléments de batterie (17) étant répartis dans plusieurs compartiments de batterie (9 - 12), dans un carter de batterie (3) isolé thermiquement pour former des paquets d'éléments (16), sachant que le carter de batterie (3) renferme un premier caloporteur à écoulement libre, en contact avec les éléments de batterie (17), lequel caloporteur échange de la chaleur, par l'intermédiaire de surfaces de transfert de chaleur (22, 23), que le carter de batterie (3) renferme, avec au moins un deuxième caloporteur qu'un système de canaux renferme, qui présente au moins une conduite d'amenée et une conduite d'évacuation menant à l'extérieur de la batterie pour un échange de chaleur à température régulée en dehors de la batterie et sachant que le carter de batterie renferme au moins une pompe (21) pour une convection forcée au niveau des éléments de batterie (17), ladite pompe se trouvant en liaison fluidique en amont et en aval du flux avec le premier caloporteur,
**caractérisée en ce que** le système de canaux présentant un conduite d'amenée et une conduite d'évacuation pour un échange de chaleur à température régulée en dehors de la batterie s'étendant à travers un espace d'échangeur de chaleur (7) rempli du premier caloporteur, orienté verticalement, prévu entre des paquets d'éléments (16), lequel espace d'échangeur de chaleur communique, par l'intermédiaire d'espaces creux côté fond des paquets d'éléments (16), avec des espaces, prévus entre les éléments de batterie, , sachant que plusieurs pompes miniatures (21) sont disposées pour une convection forcée dans l'espace d'échangeur de chaleur (7) et donc entre les éléments de batterie (17) dans la zone supérieure de l'espace d'échangeur de chaleur (7), sachant qu'une poche de pression (19) remplie d'un gaz comprimé est disposée dans chaque paquet (16) d'éléments de batterie (17) de sorte que les éléments de batterie (17) disposés dans le compartiment de batterie (9 - 12) concerné sont maintenus par serrage dans ce dernier sous l'action de la pression du gaz, et sachant que les compartiments intermédiaires entre les éléments de batterie (17) sont formés par des écarteurs (18) métalliques, se trouvant en contact conducteur de chaleur avec ces derniers, lesdits écarteurs étant constitués d'une tôle (18) présentant des nervures profilées s'étendant verticalement de sorte que les nervures profilées se trouvent en contact conducteur de chaleur avec des éléments de batterie (17) jouxtant la surface.

2. Batterie selon la revendication 1, **caractérisée en ce que** la batterie présente un couvercle (5) pouvant être posé de manière étanche, et **en ce que** les poches de pression (19) présentent un raccord de remplissage (20) pouvant être fermé de manière étanche de sorte que les poches de pression (19) peuvent être mises sous pression exerçant une action de serrage après avoir inséré les éléments de batterie sans serrage dans un compartiment de batterie (9 - 12).
